# EUROPÄISCHE PATENTSCHRIFT

(11) **EP 1 152 588 B1**
(45) Veröffentlichungstag und Bekanntmachung des Hinweises auf die Patenterteilung: **29.08.2007**
(21) Anmeldenummer: 01109999.1
(22) Anmeldetag: 25.04.2001
(51) Int. Cl.: H04N 1/107

(54) **Bildschirm-Lesegerät**
Reading device with screen
Dispositif de lecture à écran

(30) Priorität: 06.05.2000 DE 10022169
(43) Veröffentlichungstag der Anmeldung: 07.11.2001
(73) Patentinhaber: ESCHENBACH OPTIK GmbH + Co., 90409 Nürnberg (DE)
(72) Erfinder: Henkelmann, Klaus, 90552 Röthenbach (DE); Gilgert, Wolfgang, 90491 Nürnberg (DE)
(74) Vertreter: Tergau & Pohl Patentanwälte

(56) Entgegenhaltungen:
- US-A- 5 212 567
- US-A- 5 729 283

## Beschreibung

Die Erfindung bezieht sich auf ein Bildschirm-Lesegerät mit einer Videokamera zum Aufnehmen eines Videobildes von einem Lesegut, die in einem Gestell gehalten ist, das auf das Lesegut aufsetzbar ist.

Bei einem Bildschirm-Lesegerät handelt es sich um eine Sehhilfe, die von hochgradig sehbehinderten Menschen verwendet wird, bei denen eine konventionelle stark vergrößernde Sehhilfe, beispielsweise eine Leselupe oder eine Fernrohrbrille, zum Lesen von kleingedruckten Texten oder Betrachten von Bildern nicht mehr ausreicht. Ein solches Bildschirm-Lesegerät besteht aus einer Videokamera, die an einen Bildschirm, einen Monitor oder ein Fernsehgerät, angeschlossen ist. Die Videokamera ist entweder fest über einem xy-Kreuztisch montiert oder in einem Handgerät - einer sogenannten Lesemaus - eingebaut. Dieses Handgerät kann dann analog zu einer Computermaus frei über die Oberfläche des Leseguts geführt werden und ermöglicht vergrößerte Darstellungen des Leseguts auf dem Bildschirm, die mit herkömmlichen Leselupen oder Fernrohrbrillen nicht erzielt werden können. Nachteilig bei der Verwendung einer solchen Lesemaus ist allerdings, dass es mit dieser nur sehr schwer möglich ist, gezielt den für eine nähere Betrachtung ausgesuchten Bereich zu finden und sich auf dem Lesegut zu orientieren.

Die Schwierigkeiten, die hochgradig sehbehinderte Menschen im Umgang mit solchen bekannten Bildschirm-Lesegeräten haben, sind u.a. darauf zurückzuführen, dass sich ein Bildschirm-Lesegerät in seiner Handhabung grundsätzlich von den Sehhilfen unterscheidet, deren sich der Sehbehinderte bisher bedient hat. Bei der Fehlsichtigkeit hochgradig sehbehinderter Menschen handelt es sich nämlich häufig um eine altersbedingte, d.h. im Laufe des Alters zunehmende Fehlsichtigkeit. Der sehbehinderte Mensch beginnt demzufolge entsprechend der sukzessiven Zunahme seiner Sehbehinderung mit der Verwendung einer Brille. Reicht diese nicht mehr aus, nimmt er eine stark vergrößernde Handlupe zur Hilfe, bis er bei weiter zunehmender Fehlsichtigkeit auf ein Bildschirm-Lesegerät zurückgreifen muss. Der Übergang zu einem solchen Bildschirm-Lesegerät erfordert nun die Umstellung auf eine grundsätzlich andere Handhabung, die insbesondere älteren Menschen erhebliche Probleme bereitet. Durch die enorme Vergrößerung des Bildschirm-Lesegerätes ist nämlich eine indirekte Orientierung auf dem Lesegut nur schwer möglich. Die Vergrößerung des Bildschirm-Lesegerätes kann nämlich so hoch sein, dass unter Umständen nicht einmal ein komplettes Wort auf dem Bildschirm wiedergegeben wird. Eine direkte Orientierung bereitet aber aufgrund der extremen Fehlsichtigkeit ebenfalls erhebliche Probleme.

**Aus der** US5 212 567 **ist ein Bildschirm-Lesegerät zum Aufnehmen eines Videobildes von einem Lesegut bekannt. Das vom Lesegut kommende Bild wird dabei vor dem Aufnehmen durch die Videokamera mit Hilfe eines Linsensystems vergrößert.**

Der Erfindung liegt nun die Aufgabe zugrunde, ein frei über ein Lesegut bewegbares Bildschirm-Lesegerät anzugeben, dessen Bedienung vereinfacht ist und mit dem die Orientierung auf dem Lesegut erleichtert ist.

Die genannte Aufgabe wird gelöst mit den Merkmalen des Patentanspruches 1. Gemäß Patentanspruch 1 ist vorgesehen, die Videokamera eines Bildschirm-Lesegerätes in einem Gestell anzuordnen, das auf das Lesegut aufsetzbar und über dieses frei bewegbar ist und eine Lupe trägt, deren Sehfeld sich mit dem Sehfeld der Videokamera zumindest überschneidet. Durch diese Maßnahme ist gewährleistet, dass sich der Sehbehinderte einfacher und schneller auf dem Lesegut orientieren kann, indem er zunächst die Vergrößerung der Lupe ausnutzen kann, um unmittelbar auf dem Lesegut den ihn interessierenden und mittels der Wiedergabe auf einem Bildschirm zusätzlich zu vergrößernden Bereich auffinden kann.

Mit dem Bildschirm-Lesegerät gemäß der Erfindung ist für den hochgradig Sehbehinderten auch der Übergang von dem ihm bekannten Hilfsmittel, nämlich eine Leselupe mit relativ großem Sehfeld, zu einem Bildschirm-Lesegerät einfacher zu bewältigen. Das erfindungsgemäße Bildschirm-Lesegerät ermöglicht ihm nämlich eine Bedienart, die er von der Benutzung einer herkömmlichen Leselupe bereits gewohnt ist. Beim Positionieren und Führen des Bildschirm-Lesegerätes auf dem bzw. über das Lesegut kann er nämlich durch die Lupe hindurch unmittelbar und bereits vergrößert das Sehfeld der Videokamera betrachten und muss sich nicht von vornherein anhand der stark vergrößerten Wiedergabe auf dem Bildschirm auf dem Lesegut orientieren, sondern hat Blickkontakt zu der das Bildschirm-Lesegerät führenden Hand und das Auffinden der interessierenden Text- oder Bildstelle ist erheblich erleichtert.

In einer bevorzugten Ausgestaltung der Erfindung umfasst das Sehfeld der Lupe das Sehfeld der Videokamera. Durch diese Maßnahme wird das Auffinden des am Bildschirm wiederzugebenden Detailbereiches des Lesegutes weiter erleichtert.

Insbesondere ist die Videokamera zwischen der Lupe und der Auflagefläche des Gestells angeordnet. Durch diese Maßnahme ist es möglich, eine miniaturisierte Kamera in eine herkömmliche Handleselupe, deren die Lupe tragendes Gestell ein hohlzylindrischer Topf oder ein im Querschnitt rechteckiger Schacht ist, der seitlich geschlossen ist, einzubauen.

In einer weiteren bevorzugten Ausgestaltung der Erfindung ist eine Lichtquelle vorgesehen mit der zumindest das Sehfeld der Videokamera beleuchtet wird.

Insbesondere ist das Bildschirm-Lesegerät mit einem Gehäuseteil, insbesondere ein Handgriff, zur Aufnahme eines Akkus für die Bereitstellung der zum Betreiben der Videokamera und gegebenenfalls der Lichtquelle erforderlichen Leistung versehen. Wird zusätzlich eine Sendeeinrichtung, insbesondere ein Infrarotsender, zum berührungslosen Übertragen des von der Videokamera aufnehmenden Videosignales an einen Monitor vorgesehen, so sind elektrische Kabel zur Energieversorgung oder zum Übertragen des Videosignals an das Wiedergabegerät - ein Monitor oder ein Fernsehgerät - nicht mehr erforderlich. Dadurch wird die Bedienung wesentlich vereinfacht.

In einer weiteren vorteilhaften Ausgestaltung der Erfindung ist eine in den Strahlengang der Videokamera einführbare Vorsatzlinse vorgesehen. Dadurch kann die Vergrößerung der Bildschirm-Wiedergabe verändert werden.

Zur weiteren Erläuterung der Erfindung wird auf das Ausführungsbeispiel der Zeichnung verwiesen. Es zeigen:

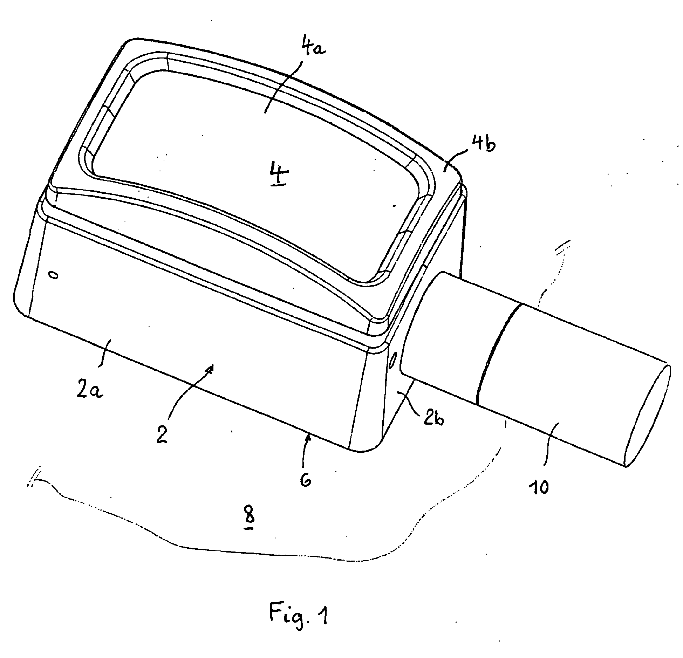

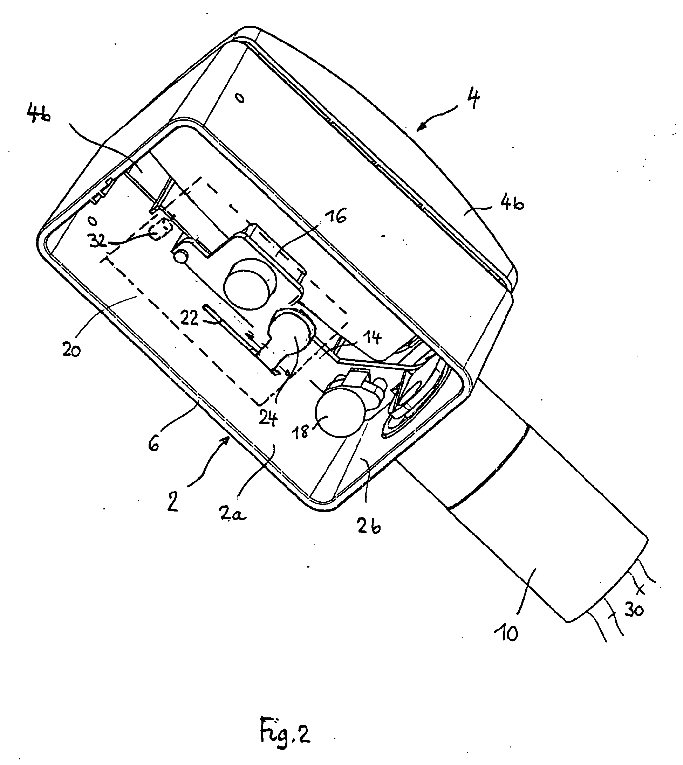

- Fig. 1 und Fig. 2: ein Bildschirm-Lesegerät gemäß der Erfindung jeweils in einer perspektivischen Gesamtansicht von oben bzw. unten.

Gemäß Fig. 1 umfasst das Bildschirm-Lesegerät ein Gestell 2, im Ausführungsbeispiel ein annähernd rechteckförmiger, oben und unten offener Schacht, der seitlich von Längswänden 2a und Querwänden 2b umgeben ist, um innerhalb des Schachtes optimale, d.h. von Streulicht aus der Umgebung unabhängige Beleuchtungsverhältnisse sicherzustellen.

Auf eine Stirnseite des leicht konisch verlaufenden Schachtes ist eine Lupe 4 aufgesetzt. Die Lupe 4 besteht aus einer Linse 4a, die mit ihrer Linsenfassung 4b im Gestell 2 gelagert ist. Das Sehfeld der Lupe 4 ist durch den von ihr abgewandten, unteren Rand des schachtförmigen Gestells 2 begrenzt, der zugleich die Auflagefläche 6 bildet, mit der das Gestell 2 auf einem Lesegut 8 aufliegt und über dieses frei bewegt werden kann.

Ein an einer der Querwände 2b des Gestells 2 angeordneter Handgriff 10 erleichtert die Handhabbarkeit des Bildschirm-Lesegerätes.

Die Linsenfassung 8 ist gemäß Fig. 2 mittels einer Rastverbindung auf das Gestell 2 aufgeschnappt. Eine Längswand 2a und die mit dem Handgriff versehene Querwand 2b des Gestells 2 sind mit jeweils einer senkrecht zu ihr verlaufenden, balkonartigen Stützwand 14 versehen, die in das Innere des Gestells 2 hineinragt und eine Tragstruktur für eine Videokamera 16, vorzugsweise eine CCD-Kamera, insbesondere eine Schwarzweiß-C-MOS-Minikamera, wie sie derzeit bereits mit Abmessungen von wenig mehr als 10x10x10 mm³ erhältlich ist, bildet.

An der Unterseite der Stützwand 14 ist eine Lichtquelle 18, beispielsweise eine herkömmliche Glühlampe oder eine weiße LED angeordnet, die zur Beleuchtung des Sehfelds der Lupe 4 bzw. der Videokamera 16 dient.

Das von der Videokamera 16 erfassbare und in der Fig. gestrichelt eingezeichnete Objekt- oder Sehfeld 20 ist kleiner als das Sehfeld der Lupe und liegt je nach Einbaulage (Neigung) der Videokamera 16 entweder am oberen Rand oder in der Mitte des Sehfeldes der Lupe 4.

Eine in einem seitlichen Schlitz 22 geführte Vorsatzlinse 24 kann mittels eines außen an der Längswand 2b angeordneten und in der Fig. nicht sichtbaren Schiebers vor das Objektiv der Videokamera 16 geschoben werden, um die Vergrößerung des Videobildes auf optischem Weg zu verändern. Alternativ hierzu kann die Vorsatzlinse auch schwenkbar am Gestell 2 gelagert sein.

Der Handgriff 10 mündet in den Innenraum des Gestells und führt die zur Bild-übertragung und elektrischen Energieversorgung erforderlichen Kabel 30.

Alternativ hierzu kann im Handgriff 10 auch ein elektrischer Energiespeicher angeordnet sein, der zur elektrischen Versorgung der Videokamera 16 und der Lichtquelle 18 dient. In einer besonders einfach zu bedienenden kabellosen Ausführungsform ist außerdem noch eine Sendeeinrichtung, beispielsweise eine elektromagnetische Sendeantenne, insbesondere ein Infrarotsender, vorgesehen, mit dem das Videosignal berührungslos zu einer entsprechenden Empfangseinrichtung übertragen wird. Hierzu ist eine entsprechende Sendediode 32 an der bei rechtshändiger Bedienung vom Benutzer abgewandten Längswand 2b angeordnet, wie dies in der Fig. schematisch eingezeichnet ist.

Aus optischen Gründen kann außerdem zwischen Querwand 14 und Lupe 4 eine Abdeckung vorgesehen sein, so dass der Aufbau der Videokamera 16 auf der Stützwand 14 sowie die Kabelführung von oben durch die Lupe 4 nicht sichtbar ist.

### Bezugszeichenliste

- 2: Gestell
- 2a: Längswand
- 2b: Querwand
- 3: Lupe
- 4a: Linse
- 4b: Linsenfassung
- 6: Auflagefläche
- 8: Lesegut
- 10: Handgriff
- 14: Stützwand
- 16: Videokamera
- 18: Lichtquelle
- 20: Sehfeld
- 22: Schlitz
- 24: Vorsatzlinse
- 30: Kabel
- 32: Sendeeinrichtung/Sendediode

## Patentansprüche

1. Bildschirm-Lesegerät
- mit einer Videokamera (16) zum Aufnehmen eines Videobildes von einem Lesegut (8), die in einem Gestell (2) angeordnet ist, das auf das Lesegut (8) aufsetzbar und über dieses frei bewegbar ist und
- mit einer Lupe (4) **zum unmittelbaren Auffinden eines Bereiches auf dem Lesegut (8),** deren Sehfeld sich mit dem Sehfeld (20) der Videokamera (16) zumindest überschneidet.

2. Bildschirm-Lesegerät nach Anspruch 1, bei dem das Sehfeld der Lupe (4) das Sehfeld (20) der Videokamera (16) umfasst.

3. Bildschirm-Lesegerät nach Anspruch 1 oder 2, bei dem die Videokamera (16) zwischen Lupe (4) und der Auflagefläche (6) des Gestells (2) angeordnet ist.

4. Bildschirm-Lesegerät nach einem der vorhergehenden Ansprüche, mit einer Lichtquelle (18) zum Beleuchten des Sehfeldes (20) der Videokamera (16).

5. Bildschirm-Lesegerät nach einem der vorhergehenden Ansprüche, bei dem die Videokamera (16) an einer Seitenwand des Gestells (2) angeordnet ist.

6. Bildschirm-Lesegerät nach einem der vorhergehenden Ansprüche, mit einem Gehäuseteil, insbesondere einem Handgriff (10), zur Aufnahme eines elektrischen Energiespeichers für die Bereitstellung der zum Betreiben der Videokamera (16) und gegebenenfalls der Lichtquelle (18) erforderlichen elektrischen Leistung.

7. Bildschirm-Lesegerät nach Anspruch 6, mit einer Sendeeinrichtung (32) zum berührungslosen Übertragen des von der Videokamera (16) aufgenommenen Videosignales an ein Wiedergabegerät.

8. Bildschirm-Lesegerät nach einem der vorhergehenden Ansprüche, mit einer in den Strahlengang der Videokamera (16) einführbaren Vorsatzlinse (24).

## Claims

1. Reader with screen
- having a video camera (16) for recording a video image of a reading material (8), which reader is arranged in a frame (2) which can be placed onto the reading material (8) and moved freely over the latter, and
- having a magnifier (4) **for directly finding an area on the reading material (8),** whose field of view at least overlaps with the field of view (20) on the video camera (16).

2. Reader with screen according to Claim 1, in which the field of view of the magnifier (4) covers the field of view (20) of the video camera (16).

3. Reader with screen according to Claim 1 or 2, in which the video camera (16) is arranged between the magnifier (4) and the bearing surface (6) of the frame (2).

4. Reader with screen according to one of the preceding claims, having a light source (18) for illuminating the field of view (20) of the video camera (16).

5. Reader with screen according to one of the preceding claims, in which the video camera (16) is arranged on a side wall of the frame (2).

6. Reader with screen according to one of the preceding claims, having a housing part, in particular a handle (10), for accommodating an electrical energy store for providing the electric power required for operating the video camera (16) and, if appropriate, the light source (18).

7. Reader with screen according to Claim 6, having a transmitting device (32) for the contactless transmission of the video signal picked up by the video camera (16) to a reproducing apparatus.

8. Reader with screen according to one of the preceding claims, having a supplementary lens (24) which can be introduced into the beam path of the video camera (16).

## Revendications

1. Dispositif de lecture à écran, comprenant :
- une caméra vidéo (16) pour prendre une image vidéo d'un objet à lire (8), qui est agencée dans un châssis (2) que l'on peut poser sur l'objet à lire (8) et qui est librement mobile au-dessus de celui-ci, et
- une loupe (4) pour la recherche immédiate d'une zone sur l'objet à lire (8), dont le champ de vision recoupe au moins le champ de vision (20) de la caméra vidéo (16).

2. Dispositif de lecture à écran selon la revendication 1, dans lequel le champ de vision de la loupe (4) englobe le champ de vision (20) de la caméra vidéo (16).

3. Dispositif de lecture à écran selon la revendication 1 ou 2, dans lequel la caméra vidéo (16) est agencée entre la loupe (4) et la surface de pose (6) du châssis (2).

4. Dispositif de lecture à écran selon l'une des revendications précédentes, comprenant une source de lumière (18) pour éclairer le champ de vision (20) de la caméra vidéo (16).

5. Dispositif de lecture à écran selon l'une des revendications précédentes, dans lequel la caméra vidéo (16) est agencée sur une paroi latérale du châssis (2).

6. Dispositif de lecture à écran selon l'une des revendications précédentes, comprenant une partie de boîtier, en particulier une poignée (10), pour le logement d'un accumulateur d'énergie électrique destiné à la fourniture de la puissance électrique nécessaire pour le fonctionnement de la caméra vidéo (16) et le cas échéant de la source de lumière (18).

7. Dispositif de lecture à écran selon la revendication 6, comprenant un dispositif émetteur (32) pour la transmission sans contact du signal vidéo enregistré par la caméra vidéo (16) vers un appareil de restitution.

8. Dispositif de lecture à écran selon l'une des revendications précédentes, comprenant une bonnette (24) susceptible d'être introduite dans le trajet des rayons de la caméra vidéo (16).
